(19) Europäisches Patentamt
European Patent Office
Office européen des brevets

(11) EP 0 678 203 B1

(12) # EUROPÄISCHE PATENTSCHRIFT

(45) Veröffentlichungstag und Bekanntmachung des Hinweises auf die Patenterteilung:
**03.09.1997 Patentblatt 1997/36**

(21) Anmeldenummer: **94904182.6**

(22) Anmeldetag: **23.12.1993**

(51) Int Cl.[6]: **G05D 21/02**

(86) Internationale Anmeldenummer:
**PCT/EP93/03675**

(87) Internationale Veröffentlichungsnummer:
**WO 94/16369 (21.07.1994 Gazette 1994/17)**

(54) **VERFAHREN ZUR KONTINUIERLICHEN MESSUNG UND REGELUNG DES pH-WERTES EINER SAUREN FLÜSSIGKEIT, BEI DEM DIE KONTINUIERLICHE MESSUNG DES pH-WERTES MIT EINER GLASELEKTRODE ERFOLGT**

METHOD FOR THE CONTINUOUS MEASUREMENT AND ADJUSTMENT OF THE pH OF AN ACIDIC LIQUID, pH MEASUREMENT BEING BY MEANS OF A GLASS ELECTRODE

PROCEDE PERMETTANT DE MESURER EN CONTINU ET DE REGLER LE pH D'UN LIQUIDE ACIDE, LE pH ETANT MESURE EN CONTINU AVEC UNE ELECTRODE EN VERRE

(84) Benannte Vertragsstaaten:
**DE**

(30) Priorität: **09.01.1993 DE 4300388**

(43) Veröffentlichungstag der Anmeldung:
**25.10.1995 Patentblatt 1995/43**

(73) Patentinhaber: **METALLGESELLSCHAFT AKTIENGESELLSCHAFT**
**60623 Frankfurt am Main (DE)**

(72) Erfinder:
- **SCHMIDT, Hans, Joachim**
  **D-60322 Frankfurt am Main (DE)**
- **STEGEMANN, Bertold**
  **D-60316 Frankfurt am Main (DE)**

(56) Entgegenhaltungen:
**EP-A- 0 076 683**
**EP-A- 0 173 403**
**EP-A- 0 516 205**
**GB-A- 2 215 327**
**US-A- 4 053 743**
**US-A- 4 940 551**
**US-A- 4 945 939**
**US-A- 5 004 696**
**US-A- 5 175 502**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 678 203 B1

## Beschreibung

Die Erfindung bezieht sich auf ein Verfahren zur kontinuierlichen Messung und Regelung des pH-Wertes einer sauren Flüssigkeit, bei dem die kontinuierliche Messung des pH-Wertes mit einer Glaselektrode erfolgt.

Verfahren zur kontinuierlichen Messung und Regelung des pH-Wertes, bei denen Glaselektroden eingesetzt werden, sind bekannt. Als Glaselektrode wird dabei ein doppeltes Zweiphasensystem mit Glas als gemeinsamer Phase bezeichnet. Die Glasphase, an deren Grenzflächen sich die von den Ionenaktivitäten abhängigen Spannungen ausbilden, wird abweichend vom sonstigen Gebrauch in der Elektrochemie auch als Glasmembran bezeichnet. Die Wirkung der Glaselektrode beruht darauf, daß es Gläser gibt, die gegenüber wässrigen Lösungen ein Potential ausbilden, das von der Aktivität der Wasserstoff-Ionen in der Lösung abhängig ist. Nach den heutigen Vorstellungen entsteht dieses Grenzflächenpotential durch einen Ionenaustauschprozeß zwischen den Alkali-Ionen des Glases und den Protonen der Lösung in der sich ausbildenden Gel-Schicht der Glasmembran. Die Glaselektrode läßt sich für pH-Bestimmungen in Lösungen verwenden, deren pH-Wert zwischen 2 und 12 liegt. Außerhalb dieses Bereiches ist das Anzeigepotential nicht mehr direkt proportional der Wasserstoff-Ionen-Konzentration der Lösung, da Säure- oder Alkalifehler auftreten können. Diese haben ihre Ursachen in der chemischen Zusammensetzung des Elektrodenglases. Der Säurefehler täuscht einen höheren, der Alkalifehler einen niedrigeren pH-Wert vor. Die Messung und Regelung des pH-Wertes einer sauren Flüssigkeit mit schwankendem pH-Wert ist daher nicht unproblematisch, besonders wenn der schwankende pH-Wert einer sauren Flüssigkeit den Wert 2 unterschreitet, da dies neben dem auftretenden Säurefehler auch zur Zerstörung der Glaselektrode führen kann.

In der EP-A-0 516 205 wird ein Verfahren zum Regeln des pH-Wertes einer sauren Waschflüssigkeit beschrieben, die mit einem pH-Wert < 3 in einer Waschzone eingesetzt wird. In der Waschzone wird Rauchgas von sauren Bestandteilen befreit, wobei die Waschflüssigkeit mindestens teilweise im Kreislauf geführt wird. Ein Teilstrom der Waschflüssigkeit wird dabei mit einem Laugestrom mit konstanter Konzentration und konstantem Volumen pro Zeiteinheit vermischt, wobei der pH-Wert der Mischung laufend mit einer Glaselektrode gemessen wird. Beim Absinken des pH-Wertes der Waschflüssigkeit unter 5 ist es vorgesehen, eine neutrale oder alkalische Korrekturflüssigkeit der Waschflüssigkeit zuzugeben, bis der pH-Wert 5 wieder überschritten wird. Bei diesem Verfahren ist jedoch nachteilig, daß schon bei relativ kleinen Schwankungen des relativ niedrigen pH-Wertes der Waschflüssigkeit der pH-Wert an der Elektrode den Bereich zwischen 2 und 12 sowohl nach oben als auch nach unten überschreitet, so daß keine genaue Messung des pH-Wertes mit einer Glaselektrode erfolgen kann.

Der Erfindung liegt die Aufgabe zugrunde, ein Verfahren zur kontinuierlichen Messung und Regelung des pH-Wertes einer sauren Flüssigkeit zu schaffen, bei dem die kontinuierliche Messung des pH-Wertes mit einer Glaselektrode erfolgt und das auch bei Schwankungen relativ niedriger pH-Werte der sauren Flüssigkeit zuverlässig durchgeführt werden kann.

Die der Erfindung zugrundeliegende Aufgabe wird dadurch gelöst, daß zur kontinuierlichen Messung und Regelung des pH-Wertes der gesamten sauren Flüssigkeit der pH-Wert eines konstanten Teilstromes der sauren Flüssigkeit kontinuierlich mit einer Glaselektrode gemessen und vor dem Kontaktieren mit der Glaselektrode mit einer ersten Menge an Base versetzt wird, bis sich ein Sollwert-pH-Bereich an der Glaselektrode von 2,5 bis 11,5 einstellt und daß sich danach einstellende Abweichungen vom Sollwert-pH-Bereich an der Glaselektrode durch Veränderung der dem Teilstrom der sauren Flüssigkeit zuzuführenden ersten Menge an Base ausgeglichen werden und daß die dem Teilstrom der sauren Flüssigkeit zuzuführende erste Menge an Base kontinuierlich gemessen und als Regelgröße zur Regelung des pH-Wertes der gesamten sauren Flüssigkeit gewählt wird und daß der Sollwertbereich der dem Teilstrom der sauren Flüssigkeit zuzuführenden ersten Menge an Base so gewählt wird, daß der Sollwert-pH-Bereich an der Glaselektrode von 2,5 bis 11,5 eingestellt wird und daß sich danach einstellende Abweichungen vom Sollwertbereich der dem Teilstrom der sauren Flüssigkeit zuzuführenden ersten Menge an Base durch Veränderung einer zweiten Menge an Base die der gesamten sauren Flüssigkeit zugeführt wird, ausgeglichen werden. Der pH-Wert der sauren Flüssigkeit wird bei dem erfindungsgemäßen Verfahren direkt aus der benötigten Menge an Base bestimmt. Für eine Mischung aus starker Säure und starker Base werden dabei mit dem Ionenprodukt des Wassers die folgenden Gleichungen zugrundegelegt, die auseinander ableitbar und für technische Berechnungen anwendbar sind:

$$c_x \cdot c_{ox} = 10^{-14} \qquad (1)$$

$$\log c_x + \log c_{ox} = -14 \qquad (2)$$

$$-\log c_x = \log c_{ox} + 14 \qquad (3)$$

$$pH = \log c_{ox} + 14 \quad (4)$$

$$c_{ox} = 10^{ph - 14} \quad (5)$$

Es hat sich in überraschender Weise gezeigt, daß das erfindungsgemäße Verfahren auch bei relativ größeren Schwankungen des pH-Wertes der sauren Flüssigkeit durchgeführt werden kann, wobei auf den Einsatz einer Glaselektrode zur Messung des pH-Wertes nicht verzichtet werden muß. Mit dem erfindungsgemäßen Verfahren läßt sich der pH-Wert an der Glaselektrode im Bereich zwischen 2,5 und 11,5 konstant halten, so daß Säurefehler, Alkalifehler oder gar eine Zerstörung der Glaselektrode vermieden werden können.

Ferner ist vorteilhaft, daß die kontinuierliche Messung und Regelung des pH-Wertes der sauren Flüssigkeit relativ verzögerungsfrei und sicher durchgeführt werden kann, wobei eine Glaselektrode zur Bestimmung des pH-Wertes eingesetzt wird. Die schwankende Menge der dem Teilstrom der sauren Flüssigkeit zuzuführenden ersten Menge an Base wird dabei als direktes Maß für die der gesamten sauren Flüssigkeit zuzuführenden zweiten Menge an Base verwendet.

Eine bevorzugte Ausgestaltung der Erfindung besteht darin, daß ein Sollwert-pH-Bereich von 10,5 bis 11,5 eingestellt wird. Durch diese Maßnahme läßt sich das Verfahren zur kontinuierlichen Messung und Regelung des pH-Wertes einer sauren Flüssigkeit, bei dem die kontinuierliche Messung des pH-Wertes mit einer Glaselektrode erfolgt, besonders zuverlässig und sicher durchführen.

Gemäß einer weiteren bevorzugten Augestaltung der Erfindung wird als Base eine NaOH-Lösung eingesetzt. Wird als Base eine NaOH-Lösung eingesetzt, so läßt sich der pH-Wert einer sauren Flüssigkeit relativ verzögerungsfrei regeln.

Nach einer weiteren bevorzugten Ausgestaltung der Erfindung werden als saure Flüssigkeiten Waschflüssigkeiten, die bei der Naßabscheidung von $SO_2$ oder $SO_3$ oder HCl oder HF oder Mischungen davon aus Rauchgasen anfallen, eingesetzt. Diese Waschflüssigkeiten weisen bei Veränderung der Rauchgaszusammensetzung in der Regel einen relativ stark schwankenden niedrigen pH-Wert auf, so daß das erfindungsgemäße Verfahren zur kontinuierlichen Messung und Regelung des pH-Wertes in besonders vorteilhafter Weise eingesetzt werden kann.

Der Gegenstand der Erfindung wird nachfolgend anhand der Zeichnung (Fig. 1) näher erläutert.

Fig. 1 zeigt ein Verfahrensfließbild mit einer pH-Meßeinrichtung und einem Wäscher.

In Fig. 1 ist ein Verfahrensfließbild mit Wäscher (2) und der pH-Meßvorrichtung (10) dargestellt. Das $SO_2$ oder $SO_3$ oder HCl oder HF oder Mischungen davon enthaltende Rohgas gelangt über die Leitung (1) in den Wäscher (2) und wird dort mit Waschflüssigkeit in Kontakt gebracht, die dem Wäscher (2) über die Leitung (4) zugeführt wird. Im Wäscher (2) wird das Rohgas von den sauren Schadstoffen befreit und über die Leitung (3) aus dem Wäscher (2) abgeführt. Die mit den sauren Schadstoffen beladene Waschflüssigkeit wird durch die Leitung (5) und die Flüssigkeitspumpe (6) im Kreislauf geführt. Ein konstanter Teilstrom der Waschflüssigkeit gelangt über die Leitung (8) und die Flüssigkeitspumpe (9) zur pH-Meßvorrichtung (10). Bevor der Teilstrom der Waschflüssigkeit die pH-Meßeinrichtung (10) erreicht, wird er mit einer ersten Menge an Base versetzt, die über die Leitung (11a) dem Teilstrom der Waschflüssigkeit zugeführt wird. Die erste Menge an Base wird mit einem Durchflußmesser (13) kontinuierlich gemessen. In der pH-Meßvorrichtung (10) ist eine Glaselektrode zur kontinuierlichen Messung und Regelung des pH-Wertes angeordnet (nicht dargestellt). Über die Leitung (11a) wird dem Teilstrom der Waschflüssigkeit eine solch große erste Menge an Base zugeführt, bis sich ein Sollwert-pH-Bereich an der Glaselektrode von 2,5 bis 11,5, vorzugsweise von 10,5 bis 11,5 einstellt. Erhöht sich die Konzentration von $SO_2$ oder $SO_3$ oder HCl oder HF oder Mischungen davon im Rohgas, so führt dies zur Absenkung des pH-Wertes der gesamten Waschflüssigkeit und damit auch zur Absenkung des pH-Wertes des Teilstroms der Waschflüssigkeit, der über die Leitung (8) und über die Flüssigkeitspumpe (9) der pH-Meßvorrichtung (10) zugeführt wird. Wird dabei der Sollwert-pH-Bereich an der Glaselektrode von 2,5 bis 11,5 unterschritten, so muß die erste Menge an Base vergrößert werden. Eine entsprechende Information wird in diesem Fall direkt von der pH-Meßvorrichtung (10) über einen Regler (nicht dargestellt) und eine Signalleitung (14) dem Ventil (12a) zugeführt. Daraufhin wird das Ventil (12a) weiter geöffnet, so daß eine größere erste Menge an Base dem Teilstrom der Waschflüssigkeit zugeführt wird. Die Veränderung des Durchsatzes an erster Menge an Base wird im Durchflußmesser (13) registriert. Der Sollwertbereich, der dem Teilstrom der Waschflüssigkeit zuzuführenden ersten Menge an Base wird so eingestellt, daß der Sollwert-pH-Bereich an der Glaselektrode von 2,5 bis 11,5, vorzugsweise von 10,5 bis 11,5 eingestellt wird. Fällt der pH-Wert an der Glaselektrode unter 2,5, so wird der Sollwert-Bereich der dem Teilstrom der Waschflüssigkeit zuzuführenden ersten Menge an Base überschritten, da dem Teilstrom der Waschflüssigkeit über die Leitung (11a) eine relativ große erste Menge an Base zugeführt werden muß. Dies bedeutet gleichzeitig, daß der pH-Wert der gesamten Waschflüssigkeit zu niedrig ist und daß der gesamten Waschflüssigkeit eine solch große zweite Menge an Base zugeführt werden muß, bis sich an der Glaselektrode wieder der Sollwert-pH-Bereich

einstellt. Der Durchflußmesser (13) ist daher direkt über einen Regler (nicht dargestellt) und einer Signalleitung (15) mit dem Ventil (12b) verbunden. Wird der Sollwertbereich, der dem Teilstrom der Waschflüssigkeit zuzuführenden ersten Menge an Base überschritten, so wird das Ventil (12b) geöffnet und eine zweite Menge an Base über die Leitung (11b) der gesamten Waschflüssigkeit in Leitung (5) zugeführt. Die Leitung (11a) für die erste Menge an Base und die Leitung (11b) für die zweite Menge an Base sind mit einer gemeinsamen Zufuhrleitung (11) verbunden. Die Mischung aus erster Menge an Base und dem Teilstrom der Waschflüssigkeit wird hinter der pH-Meßvorrichtung (10) über die Leitung (8') der im Kreislauf geführten Waschflüssigkeit zugeführt.

Zur Regeneration der mit den sauren Schadstoffen beladenen Waschflüssigkeit ist es zeitweise erforderlich, einen Teil der Waschflüssigkeit über die Leitung (7) abzuführen und getrennt aufzubereiten.

Die Erfindung wird nachfolgend anhand von Beispielen näher beschrieben:

Beispiel 1:

Zur Einstellung des Sollwert-pH-Bereiches an der Glaselektrode von 2,5 bis 11,5 werden einer starken Säure, deren pH-Wert zu messen und gegebenenfalls zu regeln ist, 0,252 Mol/l Natronlauge kontinuierlich zugegeben. Daraufhin stellt sich an der Glaselektrode ein pH-Wert von 11 ein. Für die Konzentration der $OH^-$-Ionen, die erforderlich waren, den pH-Wert von pH 7 auf pH 11 zu bringen, gilt nach Gleichung 4:

$$pH = \log C_{OH^-} + 14 \qquad (4)$$

$$\text{---->} \quad \log C_{OH^-} = pH - 14 = 11 - 14 = -3$$

$$\text{---->} \quad \underline{\underline{C_{OH^-} = 0{,}001\ Mol/l}}$$

Somit waren 0,251 Mol/l Natronlauge bzw. 0,251 Mol/l $OH^-$-Ionen erforderlich, um die starke Säure vollständig zu neutralisieren. Für die Konzentration der $H_3O^+$-Ionen der starken Säure beziehungsweise für ihren pH-Wert gilt folglich:

$$C_{H_3O^+} = 0{,}251\ Mol/l = 10^{-0{,}6}\ Mol/l$$

Der pH-Wert der starken Säure beträgt somit 0,6. Dieser Wert hat sich während der kontinuierlichen Messung des pH-Wertes nicht verändert, so daß ein Verändern der zuzuführenden Menge an Natronlauge zum Ausgleich sich einstellender Abweichungen vom Sollwert-pH-Bereich an der Glaselektrode nicht erforderlich ist. Das erfindungsgemäße Verfahren ermöglicht in diesem Beispiel die Messung eines pH-Wertes von 0,6 mittels einer Glaselektrode, die bei der Messung nicht zerstört wird, obwohl der pH-Wert der zu messenden starken Säure relativ weit unter 2 liegt.

Beispiel 2:

Der pH-Wert einer starken Säure, der um 0,6 schwankt, soll kontinuierlich mit einer Glaselektrode gemessen und geregelt werden, wobei der pH-Sollwert der starken Säure bei 0,6 liegt. Zum Schutz der Glaselektrode soll dabei ein Sollwert-pH-Bereich an der Glaselektrode von 5 bis 9 eingestellt werden.

I. Lösungsvorschlag nach dem Stand der Technik gemäß der EP-A-0 516 205 (Vergleichsbeispiel):

Für eine starke Säure mit einem pH-Wert von 0,6 gilt:

$$C_{H_3O^+} = 10^{-0{,}6}\ Mol/l = 0{,}251\ Mol/l$$

Als pH-Sollwert an der Glaselektrode wird pH = 7 gewählt. Zur vollständigen Neutralisation auf einen pH-Wert von 7 sind daher 0,251 Mol/l einer starken Base erforderlich. Wie im Beispiel 1 wird auch in diesem Beispiel Natronlauge

als starke Base verwendet.

Der starken Säure werden somit 0,251 Mol/l Natronlauge zugeführt. Dieser Durchsatz an Natronlauge wird im Gegensatz zum erfindungsgemäßen Verfahren konstant aufrechterhalten, unabhängig von pH-Schwankungen der starken Säure.

Während der kontinuierlichen Messung steigt der pH-Wert der starken Säure von 0,6 auf 0,7 an. Für die Menge der zuzuführenden $OH^-$-Ionen gilt somit:

$$C_{OH^-} = 10^{-0,7}\ \text{Mol/l} = 0,2\ \text{Mol/l}$$

Zur vollständigen Neutralisation sind somit 0,2 Mol/l Natronlauge erforderlich. Gemäß der vorgeschlagenen Verfahrensweise nach der DE-OS 41 17 382 ist die Konzentration der zuzuführenden Natronlauge jedoch konstant zu halten. Der starken Säure werden daher weiterhin 0,251 Mol/l Natronlauge zugeführt. Zur weiteren Anhebung des pH-Wertes an der Glaselektrode stehen somit 0,251 Mol/l - 0,2 Mol/l = 0,051 Mol/l Natronlauge zur Verfügung. Nach Gleichung 4 ergibt sich somit für den pH-Wert an der Glaselektrode:

$$\underline{\underline{pH}} = \log C_{OH^-} + 14$$

$$= \log 0,051 + 14 = \underline{\underline{12,7}}$$

Nach 20 Minuten fällt der pH-Wert der starken Säure von 0,7 auf 0,5. Um eine Lösung mit einem pH-Wert von 0,5 vollständig zu neutralisieren, sind $10^{-0,5}$ Mol/l = 0,316 Mol/l Natronlauge erforderlich. Es stehen jedoch nur 0,251 Mol/l Natronlauge zur Verfügung, so daß ein Säureüberschuß von 0,065 Mol/l vorhanden ist. Dies hat zur Folge, daß der pH-Wert an der Glaselektrode von 12,7 auf 1,2 abfällt, da für die Konzentration der $H_3O^+$-Ionen gilt:

$$C_{H_3O^+} = 0,065\ \text{Mol/l} = 10^{-1,2}\ \text{Mol/l}$$

Daraus ergibt sich, daß die vorgeschlagene Verfahrensweise gemäß der DE-OS 41 17 382 nicht mehr realisiert werden kann, wenn der pH-Wert von 0,6 einer starken Säure lediglich um ± 0,1 schwankt, da dann bereits die pH-Werte an der Glaselektrode im Bereich von 1,2 bis 12,7 schwanken und der Sollwert-pH-Bereich an der Glaselektrode von 5 bis 9 somit nicht mehr eingehalten werden kann.

II. Lösung nach dem erfindungsgemäßen Verfahren:

Nach dem erfindungsgemäßen Verfahren ist es vorgesehen, sich einstellende Abweichungen vom Sollwert-pH-Bereich an der Glaselektrode durch Verändern der zuzuführenden Menge an Base auszugleichen. Ausgehend von einem pH-Wert der starken Säure von 0,6 werden der starken Säure vor dem Kontaktieren der Glaselektrode 0,251 Mol/l Natronlauge zugegeben. Dadurch stellt sich ein pH-Wert an der Glaselektrode von 7 ein. Steigt der pH-Wert der sauren Lösung auf 0,7, so werden 0,2 Mol/l Natronlauge zur Neutralisation bzw. zur Anhebung auf einen pH-Wert von 7 benötigt. Steigt der pH-Wert der sauren Lösung auf 0,7, so werden der starken Säure anstelle der 0,251 Mol/l Natronlauge lediglich 0,2 Mol/l Natronlauge zugeführt. Der pH-Wert an der Glaselektrode kann somit erneut auf 7 eingestellt werden, ohne daß der Sollwert-pH-Bereich von 5 bis 9 verlassen wird. Fällt der pH-Wert der starken Säure anschließend auf 0,5, so werden zur vollständigen Neutralisation 0,316 Mol/l Natronlauge benötigt. Fällt der pH-Wert der starken Säure auf 0,5 ab, werden der starken Säure somit nach dem erfindungsgemäßen Verfahren 0,316 Mol/l Natronlauge zugegeben. Dabei kann der pH-Wert an der Glaselektrode ebenfalls wieder auf 7 eingestellt werden.

Zusammenfassend ergibt sich für die Lösung nach dem erfindungsgemäßen Verfahren:

| pH-Wert der sauren Flüssigkeit | zugeführte Natronlauge in Mol/l |
|---|---|
| 0,5 | 0,316 |
| 0,6 | 0,251 |
| 0,7 | 0,200 |

Zwischen dem pH-Wert der sauren Flüssigkeit und der Konzentration der zuzuführenden Natronlauge besteht somit ein funktioneller Zusammenhang, so daß die Konzentration der zuzuführenden Natronlauge als direktes Maß für den pH-Wert der sauren Flüssigkeit angesehen werden kann. Dies gilt auch dann, wenn pH-Werte von schwachen Säuren oder von Mischungen aus starker und schwacher Säure gemessen und geregelt werden sollen. Der Einfluß der Volumenänderungen ist technisch nicht von Bedeutung und kann allgemein bei der Berechnung vernachlässigt werden.

Beispiel 3:

100 000 $m^3$/h Rauchgas werden einem Wäscher zugeführt und mit 290 $m^3$/h Waschflüssigkeit im Gegenstrom in Kontakt gebracht. Das Rauchgas enthält 400 mg/$m^3$ $SO_2$, 3 mg/$m^3$ $SO_3$, 1000 mg/$m^3$ HCl und 10 mg/$m^3$ HF. Die Waschflüssigkeit wird im oberen Teil des Wäschers eingedüst, im unteren Teil des Wäschers abgezogen und erneut im oberen Teil des Wäschers mit dem Rauchgas in Kontakt gebracht. Diesem zirkulierenden Waschflüssigkeitskreislauf werden 100 l/h Waschflüssigkeit entnommen und einer pH-Meßvorrichtung zugeführt. Die pH-Messung erfolgt mit Hilfe einer Glaselektrode. Als Base wird wie in den Beispielen 1 und 2 Natronlauge verwendet.

Bevor dieser Teilstrom der Waschflüssigkeit mit der Glaselektrode der pH-Meßvorrichtung kontaktiert wird, werden dem Teilstrom der Waschflüssigkeit 4,7 l/h Natronlauge zugeführt. Dabei stellt sich ein pH-Wert an der Glaselektrode von 11,0 ein, der somit im gewählten Sollwert-pH-Bereich von 10,5 bis 11,5 liegt. Die dem zirkulierenden Waschflüssigkeitskreislauf zugeführte zweite Menge an Natronlauge zur Neutralisierung der ausgewaschenen Schadstoffe HCl und HF beträgt 0,51 $m^3$/h. Nach 30 min wird der Sollwert-pH-Bereich an der Glaselektrode unterschritten und dadurch die Menge der dem Teilstrom der Waschflüssigkeit zuzuführenden ersten Menge an Base auf 5,3 l/h erhöht. Der Durchsatz der dem Teilstrom der Waschflüssigkeit zuzuführenden ersten Menge an Natronlauge wird kontinuierlich mit Hilfe eines Durchflußmessers gemessen. Die Erhöhung des Durchsatzes der dem Teilstrom der Waschflüssigkeit zuzuführenden ersten Menge an Natronlauge von 4,7 auf 5,3 l/h bewirkt, daß der gesamten zirkulierenden Waschflüssigkeit, deren pH-Wert auf 0,6 einzuregeln ist, 2,25 $m^3$/h einer zweiten Menge an Natronlauge zugeführt werden, wobei sich ein pH-Wert der im Kreislauf geführten Waschflüssigkeit von 0,6 einstellt, was dem gewünschten Sollwert entspricht. Das Reingas wird im oberen Teil des Wäschers abgezogen und enthält lediglich 20 mg/$m^3$ HCl und 2 mg/$m^3$ HF. Der gesamten im Kreislauf geführten Waschflüssigkeit werden kontinuierlich ca. 4 $m^3$/h entnommen und einer separaten Aufbereitungsstufe zugeführt. Fehlende Mengen an Waschflüssigkeit werden durch Frischwasser ersetzt.

**Patentansprüche**

**1.** Verfahren zur kontinuierlichen Messung und Regelung des pH-Wertes einer sauren Flüssigkeit, bei dem die kontinuierliche Messung des pH-Wertes mit einer Glaselektrode erfolgt, dadurch gekennzeichnet, daß zur kontinuierlichen Messung und Regelung des pH-Wertes der gesamten sauren Flüssigkeit der pH-Wert eines konstanten Teilstromes der sauren Flüssigkeit kontinuierlich mit einer Glaselektrode gemessen und vor dem Kontaktieren mit der Glaselektrode mit einer ersten Menge an Base versetzt wird, bis sich ein Sollwert-pH-Bereich an der Glaselektrode von 2,5 bis 11,5 einstellt und das sich danach einstellende Abweichungen vom Sollwert-pH-Bereich an der Glaselektrode durch Veränderung der dem Teilstrom der sauren Flüssigkeit zuzuführenden ersten Menge an Base ausgeglichen werden und daß die dem Teilstrom der sauren Flüssigkeit zuzuführende erste Menge an Base kontinuierlich gemessen und als Regelgröße zur Regelung des pH-Wertes der gesamten sauren Flüssigkeit gewählt wird und daß der Sollwertbereich der dem Teilstrom der sauren Flüssigkeit zuzuführenden ersten Menge an Base so gewählt wird, daß der Sollwert-pH-Bereich an der Glaselektrode von 2,5 bis 11,5 eingestellt wird und daß sich danach einstellende Abweichungen vom Sollwertbereich der dem Teilstrom der sauren Flüssigkeit zuzuführenden ersten Menge an Base durch Veränderung einer zweiten Menge an Base, die der gesamten sauren Flüssigkeit zugeführt wird, ausgeglichen werden.

**2.** Verfahren nach Anspruch 1, dadurch gekennzeichnet, daß ein Sollwert-pH-Bereich von 10,5 bis 11,5 eingestellt wird.

**3.** Verfahren nach Anspruch 1 oder Anspruch 2, dadurch gekennzeichnet, daß als Base eine NaOH-Lösung eingesetzt wird.

**4.** Verfahren nach einem der Ansprüche 1 bis 3, dadurch gekennzeichnet, daß als saure Flüssigkeiten Waschflüssigkeiten, die bei der Naßabscheidung von $SO_2$ oder $SO_3$ oder HCl oder HF oder Mischungen davon aus Rauchgasen anfallen, eingesetzt werden.

## Claims

1. A method for the continuous measurement and regulation of the pH value of an acidic liquid, in which the continuous measurement of the pH value is effected using a glass electrode, characterised in that for the continuous measurement and regulation of the pH value of the entire acidic liquid the pH value of a constant partial stream of the acidic liquid is measured continuously with a glass electrode and before contacting with the glass electrode a first quantity of base is mixed therewith until a desired-value pH range at the glass electrode of 2.5 to 11.5 is obtained and that deviations from the desired-value pH range at the glass electrode which occur thereafter are compensated by changing the first quantity of base which is to be supplied to the partial stream of the acidic liquid and that the first quantity of base which is to be supplied to the partial stream of the acidic liquid is continuously measured and is selected as a regulating variable for regulating the pH value of the entire acidic liquid and that the desired-value range of the first quantity of base to be supplied to the partial stream of the acidic liquid is selected such that the desired-value pH range at the glass electrode of 2.5 to 11.5 is obtained and that deviations from the desired-value range of the first quantity of base to be supplied to the partial stream of the acidic liquid which occur thereafter are compensated by changing a second quantity of base which is supplied to the entire acidic liquid.

2. A method according to Claim 1, characterised in that a desired-value pH range of 10.5 to 11.5 is set.

3. A method according to Claim 1 or Claim 2, characterised in that an NaOH solution is used as base.

4. A method according to one of Claims 1 to 3, characterised in that washing liquids which are produced upon the wet separation of $SO_2$ or $SO_3$ or HCl or HF or mixtures thereof from flue gases are used as acidic liquids.

## Revendications

1. Procédé de mesure et de régulation en continu du pH d'un liquide acide, dans lequel la mesure du pH en continu s'effectue par une électrode de verre, caractérisé en ce que, pour la mesure et la régulation en continu du pH de tout le liquide acide, on mesure en continu par une électrode de verre le pH d'un courant partiel constant du liquide acide et, avant la mise en contact avec l'électrode de verre, on le mélange à une première quantité de base jusqu'à ce qu'il s'établisse un domaine de pH de consigne sur l'électrode de verre de 2,5 à 11,5 et on compense les écarts, par rapport au domaine de pH de consigne, qui s'établissent ensuite sur l'électrode de verre en modifiant la première quantité de base envoyée au courant partiel du liquide acide et en ce que l'on mesure en continu la première quantité de base envoyée au courant partiel de liquide acide et on la choisit comme grandeur de régulation pour régler le pH de tout le liquide acide et que l'on choisit le domaine de pH de la première quantité de base envoyée au courant partiel du liquide acide de façon que le domaine de pH de consigne sur l'électrode de verre soit compris entre 2,5 et 11,5 et en ce que l'on compense des écarts, par rapport au domaine de consigne, qui s'établissent ensuite de la première quantité de base envoyée au courant partiel du liquide acide, en modifiant une seconde quantité de base qui est envoyée à tout le liquide acide.

2. Procédé suivant la revendication 1, caractérisé en ce que l'on établit un domaine de pH de consigne de 10,5 à 11,5.

3. Procédé suivant la revendication 1 ou la revendication 2, caractérisé en ce que l'on utilise comme base une solution de NaOH.

4. Procédé suivant l'une des revendications 1 à 3, caractérisé en ce que l'on utilise comme liquide acide, des liquides de lavage qui se produisent lors de la séparation par voie humide de $SO_2$ ou de $SO_3$ ou de HCl ou de HF ou de mélanges de ceux-ci provenant de gaz de carneau.

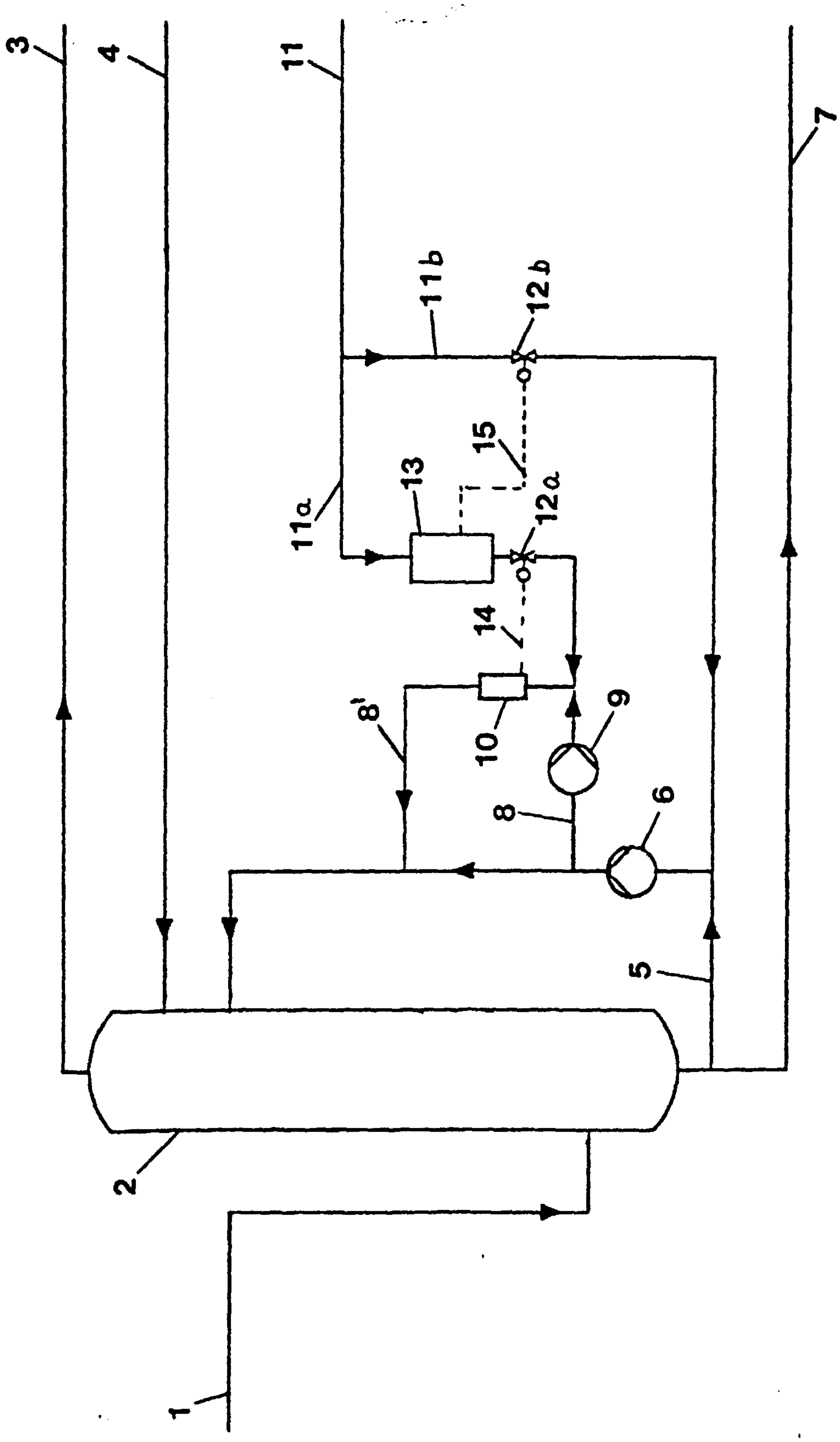


Fig. 1